# EUROPEAN PATENT SPECIFICATION

(11) **EP 4 198 817 B1**
(45) Date of publication and mention of the grant of the patent: **24.04.2024**
(21) Application number: 21214232.7
(22) Date of filing: 14.12.2021
(51) Int. Cl.: G06F 18/214, G06F 18/24, G06V 10/764, G06V 10/774, G06V 20/70

(54) **SYSTEM, METHOD, AND COMPUTER PROGRAM FOR RETRAINING A PRE-TRAINED OBJECT CLASSIFIER**
SYSTEM, VERFAHREN UND COMPUTERPROGRAMM ZUM ERNEUTEN TRAINIEREN EINES VORTRAINIERTEN OBJEKTKLASSIFIKATORS
SYSTÈME, PROCÉDÉ ET PROGRAMME INFORMATIQUE DE RÉAPPRENTISSAGE DE CLASSIFICATEUR D'OBJETS PRÉ-FORMÉ

(43) Date of publication of application: 21.06.2023
(73) Proprietor: Axis AB, 223 69 Lund (SE)
(72) Inventor: Tullberg, Joacim, 223 69 LUND (SE)
(74) Representative: AWA Sweden AB

(56) References cited:
- US-A1- 2017 039 455
- US-A1- 2021 042 530
- FOROUGHI HOMA ET AL: "Robust people counting using sparse representation and random projection", PATTERN RECOGNITION, vol. 48, no. 10, 1 October 2015 (2015-10-01), pages 3038-3052, XP029177379, ISSN: 0031-3203, DOI: 10.1016/J.PATCOG.2015.02.009

## Description

### TECHNICAL FIELD

Embodiments presented herein relate to a method, a system, and a computer program for retraining a pre-trained object classifier.

### BACKGROUND

Object recognition is a general term to describe a collection of related computer vision tasks that involve identifying objects in image frames. One such task is object classification that involves predicting the class of an object in an image frame. Another such task is object localization that refers to identifying the location of one or more objects in the image frame, and optionally providing a bounding box enclosing the thus localized object. Object detection can be regarded as a combination of these two tasks and thus both localizes and classifies one or more objects in an image frame.

One way to perform object classification is to compare an object to be classified with a set of template objects representing different object classes, and then classifying the object to the object class of the template object that, according to some metric, is most similar to the object. The classification can be based on a model that is trained with datasets of annotated objects. Models for object classification can be developed using Deep Learning (DL) techniques. The resulting models can be referred to as object classification DL models, or just models for short. Such models can be trained based on datasets that are continuously improved. Trained and updated models need to be sent, during firmware update or similar update processes, to systems using an old version of the models.

In general terms, a model is only as good as it is trained. Therefore, a certain amount of further training of the model would improve the classification. In other words, the more training data, the better (in terms of accuracy of the classification, the computational speed at which the classification can be made, etc.) the object classifier would perform. In order to capture as much training data as possible and to be as general as possible, models are traditionally static pre-trained generic models that are applied to sets of training data, regardless of under which conditions the image frames in the training data have been captured. This generally requires the training data to be annotated. However, the cost of annotation, in terms of either manual labour or computer computations, as well as privacy regulations might limit the possibility to annotate large set of training data as well as the acquisition of the actual training data itself.

US 2017/039455 A1 relates to a method for securing an environment.

Foroughi Homa et al: "Robust people counting using sparse representation and random projection", Pattern Recognition, Vol. 48, No. 10, 1 October 2015, pages 3038-3052 relates to a method for estimating the number of people present in an image for practical applications including visual surveillance and public resource management.

US 2021/042530 A1 relates to aspects of an artificial-intelligence (AI) powered ground truth generation for object detection and tracking on image sequences.

Hence, there is still a need for improved training of object classifiers.

### SUMMARY

An object of embodiments herein is to address the above issues.

In general terms, according to the herein disclosed inventive concept, improved training of an image classifier is achieved by retraining a pre-trained object classifier. In turn, according to the herein disclosed inventive concept, this is achieved by annotating instances of tracked objects to belong to an object class based on the fact that another instance of the same tracked object already has been verified to belong to the same object class.

According to a first aspect the inventive concept is defined by a method for retraining a pre-trained object classifier. The method is performed by a system, The system comprises processing circuitry, The method comprises obtaining a stream of image frames of a scene. Each of the image frames depicts an instance of a tracked object. The tracked object is one same object being tracked when moving in the scene. The method comprises classifying, with a level of confidence, each instance of the tracked object to belong to an object class. The method comprises verifying that the level of confidence for at least one of the instances of the tracked object, and for only one object class, is higher than a threshold confidence value, for thereby ensuring that at least one of the instances of the tracked object is classified with high confidence to said only one object class. The method comprises, when so, annotating all instances of the tracked object in the stream of image frames as belonging to said only one object class with high confidence, yielding annotated instances of the tracked object. The method comprises retraining the pre-trained object classifier with at least some of the annotated instances of the tracked object.

According to a second aspect the inventive concept is defined by a system for retraining a pre-trained object classifier. The system comprises processing circuitry. The processing circuitry is configured to cause the system to obtain a stream of image frames of a scene. Each of the image frames depicts an instance of a tracked object. The tracked object is one same object being tracked when moving in the scene. The processing circuitry is configured to cause the system to classify, with a level of confidence, each instance of the tracked object to belong to an object class. The processing circuitry is configured to cause the system to verify that the level of confidence for at least one of the instances of the tracked object, and for only one object class, is higher than a threshold confidence value, for thereby ensuring that at least one of the instances of the tracked object is classified with high confidence to said only one object class. The processing circuitry is configured to cause the system to, when so, annotate all instances of the tracked object in the stream of image frames as belonging to said only one object class with high confidence, yielding annotated instances of the tracked object. The processing circuitry is configured to cause the system to retrain the pre-trained object classifier with at least some of the annotated instances of the tracked object.

According to a third aspect the inventive concept is defined by a system for retraining a pre-trained object classifier. The system comprises an obtainer module configured to obtain a stream of image frames of a scene. Each of the image frames depicts an instance of a tracked object. The tracked object is one same object being tracked when moving in the scene. The system comprises a classifier module configured to classify, with a level of confidence, each instance of the tracked object to belong to an object class. The system comprises a verifier module configured to verify that the level of confidence for at least one of the instances of the tracked object, and for only one object class, is higher than a threshold confidence value, for thereby ensuring that at least one of the instances of the tracked object is classified with high confidence to said only one object class. The system comprises an annotator module configured to annotate all instances of the tracked object in the stream of image frames as belonging to said only one object class with high confidence, yielding annotated instances of the tracked object. The system comprises a re-trainer module configured to re-train the pre-trained object classifier with at least some of the annotated instances of the tracked object.

According to a fourth aspect the inventive concept is defined by a computer program for retraining a pre-trained object classifier, the computer program comprising computer program code which, when run on a system, causes the system to perform a method according to the first aspect.

Advantageously, these aspects provide improved training of pre-trained object classifiers.

The annotated instances of the tracked object can be used for training, or re-training also of other object classifiers than the pre-trained object classifier mentioned in the above aspects. Hence, advantageously, these aspects provide means for automatically generating large sets of annotated training data from sets with only partially annotated training data.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 schematically illustrates a system according to embodiments;
Fig. 2 is a block diagram of a system according to embodiments;
Fig. 3 is a flowchart of methods according to embodiments;
Fig. 4 schematically illustrates annotation of a stream of image frames according to embodiments;
Fig. 5 is a schematic diagram showing functional units of a system according to an embodiment; and
Fig. 6 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

As noted above there is still a need for improved training of object classifiers.

In general terms, as realized by the inventor of the herein disclosed inventive concepts, the classification result of object classifiers of objects might depend on the angle at which the image frames of the object are captured, the lighting conditions at which the image frames of the object are captured, the image resolutions of the image frames, etc. Some angles, lighting conditions, image resolutions, etc. thus result in higher confidence levels than other angles, lighting conditions, image resolutions, etc.

This means that when a tracked object is moving along a path through the scene it is likely that the tracked object, during some parts of the path, will be comparatively easy to classify by the used object classifier, and that the object, during some other parts of the path, will be comparatively difficult to classify using the same object classifier, due to changing angles, lighting conditions, etc. However, this fact cannot be taken advantage of since, object trackers and object classifiers typically operate independently of each other.

Tracked objects that are comparatively easy to classify generally results in high confidence values whereas tracked objects that are comparatively difficult to classify generally results in low confidence values for the object in that specific image frame. Since it is unlikely that an object will change from one object class to another, e.g., from "person" to "truck", during its movement through the scene, this means that if an object at any one instance is classified with a confidence level, e.g., as a "person" with high confidence, the underlying physical object which the tracked object represents will remain a "person" even if the tracked object at a later stage in its path, and thus in a later image frame, is more difficult to classify, e.g., the tracked object is still classified as a "person" but only with low confidence. This realization is utilized by the herein disclosed inventive concepts.

In particular, according to the herein disclosed inventive concepts, this realization is utilized to generate new and classified training data for a pre-trained object classifier. At least some of the herein disclosed embodiments therefore relate to automated gathering and annotation of training data for refined object classification in general or for specific camera installation. The embodiments disclosed herein in particular relate to mechanisms for retraining a pre-trained object classifier. In order to obtain such mechanisms there is provided a system, a method performed by the system, a computer program product comprising code, for example in the form of a computer program, that when run on a system, causes the system to perform the method.

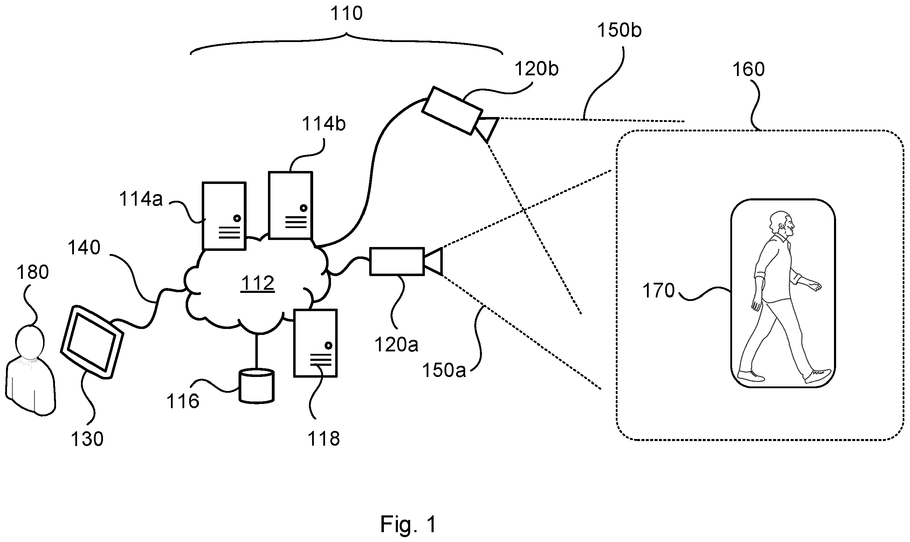

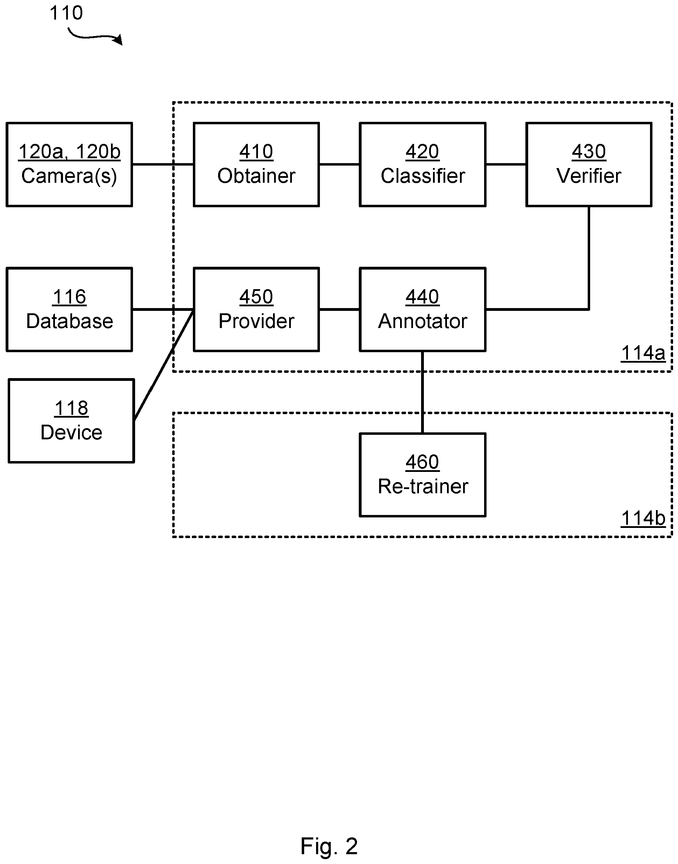

**Fig. 1** is a schematic diagram illustrating a system 110 where embodiments presented herein can be applied. The system 110 comprises at least one camera device 120a, 120b. Each camera device 120a, 120b is configured to capture image frames depicting a scene 160 within a respective field of view 150a, 150b. According the illustrative examples of Fig. 1, the scene comprises a walking male person. The walking male person represents a tracked object 170, as enclosed by a bounding box. In some examples each camera device 120a, 120b is a digital camera device and/or capable of pan, tilt and zoom (PTZ) and can thus be regarded as a (digital) PTZ camera device. The system 110 is configured to communicate with a user interface 130 for displaying the captured image frames. Further, the system 110 is configured to encode the images such that it can be decoded using any known video coding standard, such as any of: High Efficiency Video Coding (HEVC), also known as H.265 and MPEG-H Part 2; Advanced Video Coding (AVC), also known as H.264 and MPEG-4 Part 10; Versatile Video Coding (WC), also known as H.266, MPEG-I Part 3 and Future Video Coding (FVC); VP9, VP10 and AOMedia Video 1 (AV1), just to give some examples. In this respect, the encoding might be performed either directly in conjunction with the camera devices 120a, 120b capturing the image frames or at another entity, and then, at least temporarily, stored in a database 116. The system 110 further comprises a first entity 114a and a second entity 114b. Each of the first entity 114a and the second entity 114b might be implemented in either the same or in separate computing devices. The first entity 114a might e.g. be configured to obtain a stream of image frames of the scene 160 and to provide the second entity 114b with instances of the tracked object 170. Further details of the first entity 114a will be disclosed with reference to Fig. 2. The second entity 114b might be an object classifier 114b. The object classifier 114b is assumed to be pre-trained and is therefore henceforth referred to as a pre-trained object classifier 114b. The system 110 might comprises further entities, functions, nodes, and devices, as represented by device 118. Examples of such further entities, functions, nodes, and devices are computing devices, communication devices, servers, sensors, etc.

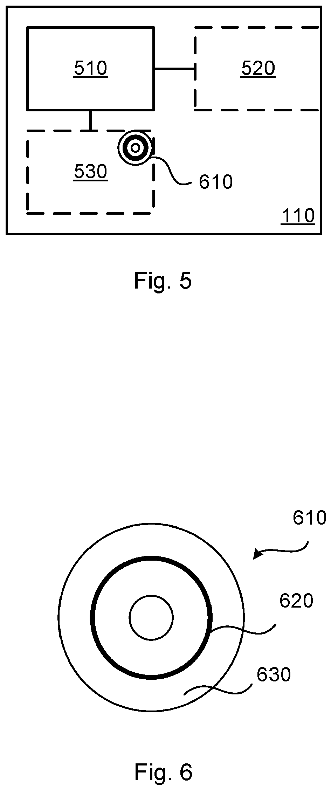

In some aspects, the first entity 114a, the second entity 114b, and the database 116 defines a video management system (VMS). The first entity 114a, the second entity 114b, and the database 116 are therefore considered as part of the system 110. The first entity 114a, the second entity 114b, and the database 116 are operatively connected to the camera devices 120a, 120b over a network 112. The network 112 might be wired, wireless, or partly wired and partly wireless. In some examples the system 110 comprises a communication interface 520 (as in Fig. 5) configured to communicate with the user interface 130 for displaying the image frames. At reference numeral 140 is illustrated an example connection between the system 110 and the user interface 130. The connection 140 might be wired, wireless, or partly wired and partly wireless. A user 180 might interact with the user interface 130. It is understood that the user interface 130 at least partly is a visual user interface since it is configured to display the image frames captured by the camera devices 120a, 120b.

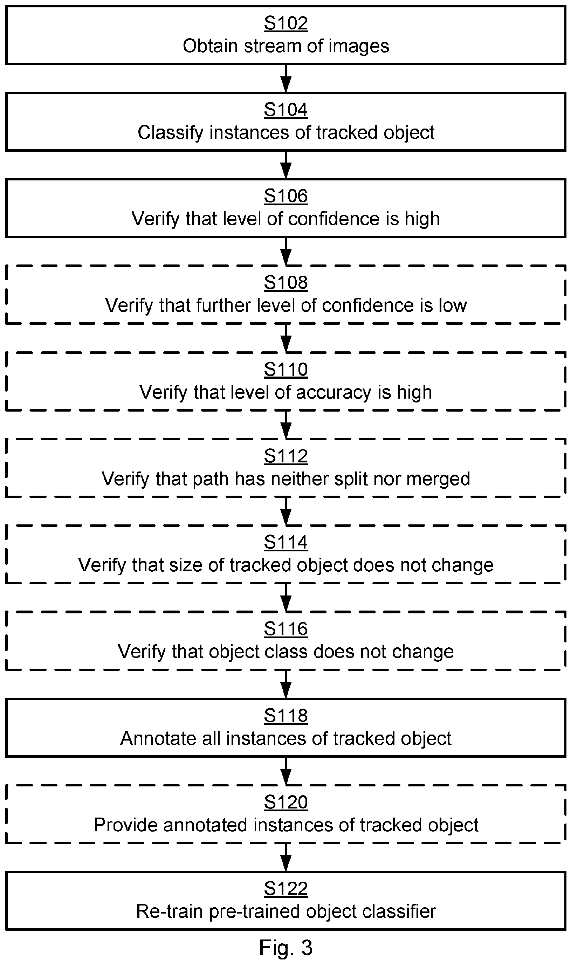

Embodiments for retraining a pre-trained object classifier 114b will now be disclosed with parallel reference to Fig. 2 and Fig. 3. **Fig. 2** is a block diagram of a system 110 according to embodiments. **Fig. 3** is a flowchart illustrating embodiments of methods for retraining a pre-trained object classifier 114b. The methods are performed by the system 110. The methods are advantageously provided as computer programs 620 (see, Fig. 6).

S102: A stream of image frames of a scene 160 is obtained. The stream of image frames might be obtained by obtainer module 410. Each of the image frames depicts an instance of a tracked object 170. The stream of image frames might be obtained by obtainer module 410 from at least one camera device 120a, 120b, as in Fig. 2.

S104: Each instance of the tracked object 170 is classified, with a level of confidence, to belong to an object class. The classification might be performed by classifier module 420.

S106: It is verified that the level of confidence for at least one of the instances of the tracked object 170 is higher than a threshold confidence value. The verification might be performed by verifier module 430.

S118: All instances of the tracked object 170 in the stream of image frames are annotated as belonging to the object class. This annotation yields annotated instances of the tracked object 170. The annotation might be performed by annotator module 440.

If it can be successfully verified that the level of confidence for at least one of the instances of the tracked object 170 is higher than the threshold confidence value, one or more instances of the same object in other image frames but only having been classified with a medium or low confidence level can thus be extracted and annotated as if classified with high confidence.

S118 is in this respect thus only entered when it can be successfully verified that the level of confidence for at least one of the instances of the tracked object 170 is higher than the threshold confidence value in S106. Hence, by means of S106 it is ensured that the tracked object 170 is classified with a high confidence to only one object class before S118 is entered.

S122: The pre-trained object classifier 114b is re-trained with at least some of the annotated instances of the tracked object 170. The re-training might be performed by re-trainer module 460.

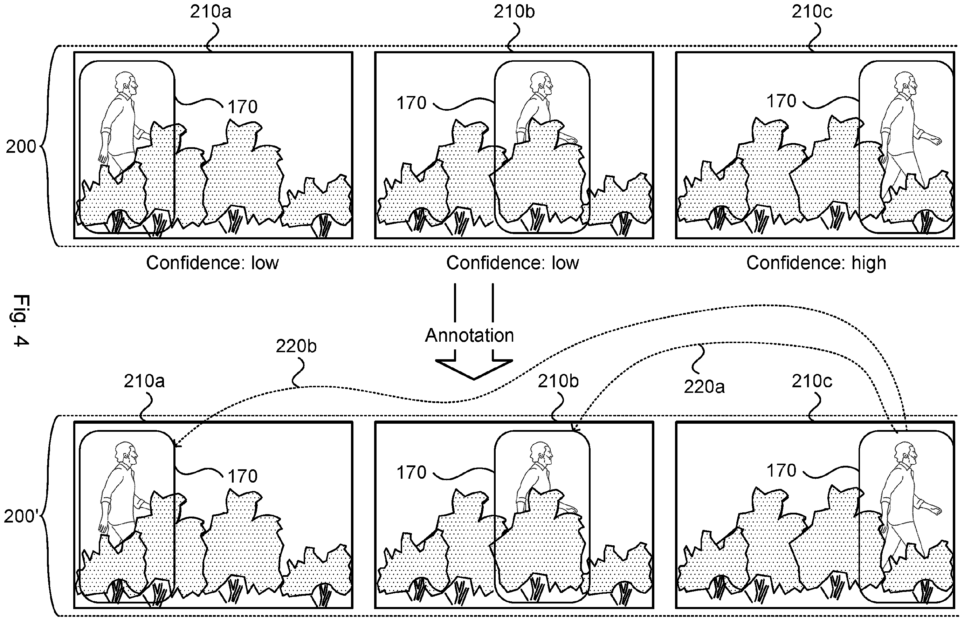

The pre-trained object classifier 114b can thus be re-trained with additional annotated instances of the tracked object 170. If this is done for an object classification model, the object classification model will therefore over time be able to provide improved classification of objects better in areas of the scene 160 where classification was originally harder, i.e., where the classifications were given low or medium confidence. An example of this will be provided below with reference to Fig. 4.

Hence, if the tracked object 170 in S106 is verified to be classified as belonging to only one object class with high confidence in at least one image frame, the same tracked object 170 from other image frames are used for re-training of the pre-trained object classifier 114b. Likewise, the tracked object 170 in other image frames will not be used for re-training of the pre-trained object classifier 114b if the tracked object 170 is never classified as belonging to one object class with high confidence.

Embodiments relating to further details of retraining a pre-trained object classifier 114b as performed by the system 110 will now be disclosed.

As indicated in Fig. 2, the classification and the re-training might be performed at separate devices. That is, in some embodiments, the classifying is performed at a first entity 114a and the retraining is performed at a second entity 114b physically separated from the first entity 114a. The second entity might be the (pre-trained) object classifier 114b.

There may be further verifications made before all instances of the tracked object 170 in the stream of image frames are annotated as belonging to the object class, and thus before S118 is entered. Different embodiments relating thereto will now be described in turn.

It could be that some tracked objects 170 are classified to belong to two or more object classes, each classification having its own level of confidence. In some aspect, it is therefore verified that only one of these object classes has high level of confidence. Hence, in some embodiments, at least some of the instances of the tracked object 170 are classified to also belong to a further object class with a further level of confidence, and the method further comprises:
S108: It is verified that the further level of confidence is lower than the threshold confidence value for the at least some of the instances of the tracked object 170. The verification might be performed by verifier module 430.

Hence, if the tracked object 170 is classified with high confidence to two or more different object classes, the tracked object 170 will not be used for re-training of the pre-trained object classifier 114b. The same is true, i.e., the tracked object 170 will not be used for re-training, if the tracked object 170 is never classified with high confidence to any object class.

In some aspects, the path along which the tracked object 170 moves from one image frame to the next is also tracked. If the tracked object 170 is classified as belonging to only one object class with high confidence at least once, the path can be used for re-training of the pre-trained object classifier 114b. Hence, in some embodiments, the tracked object 170 moves along a path in the stream of image frames, and the path is tracked when the tracked object 170 is tracked.

In some aspects, it is then verified that the path itself can be tracked with high accuracy. That is, in some embodiments, the path is tracked at a level of accuracy, and the method further comprises:
S110: It is verified that the level of accuracy is higher than a threshold accuracy value. The verification might be performed by verifier module 430.

In some aspects, it is verified that the path has neither split nor merged. If the path has split and/or merged at least once, this could be an indication that the level of accuracy at which the path is tracked is not higher than the threshold accuracy value. This may be the case if it is suspected that the path has been merged from two or more other paths or is split into two or more other paths. If so, the path is determined to be of low accuracy, and it will not be used for re-training of the pre-trained object classifier 114b. Hence, in some embodiments, the method further comprises:
S112: It is verified that the path has neither split into at least two paths nor merged from at least two paths within the stream of image frames. In other words, it is verified that the path is free from any splits or merges, and thus constitutes one single path. The verification might be performed by verifier module 430.

The same principles can also be applied if it is suspected that the tracked object 170 has odd size behaviour that can be suspected to be caused by shadowing, mirror effects, or similar. If so, the tracked object 170 is assumed to be classified with low confidence, and it will not be used for re-training of the pre-trained object classifier 114b. Hence, in some embodiments, the tracked object 170 has a size in the image frames, and the method further comprises:
S114: It is verified that the size of the tracked object 170 does not change more than a threshold size value within the stream of image frames. The verification might be performed by verifier module 430.

Since the apparent size of the tracked object 170 depends on the distance between the tracked object 170 and the camera device 120a, 120b, a compensation of the size of the tracked object 170 with respect to this distance can be made as part of the verification in S114. In particular, in some embodiments, the size of the tracked object 170 is adjusted by distance-dependent compensation factor determined as a function of the distance between the tracked object 170 and the camera device 120a, 120b having captured the stream of image frames of the scene 160 when verifying that that the size of the tracked object 170 does not change more than the threshold size value within the stream of image frames 210a:210c.

As illustrated in, and as disclosed with reference to, Fig. 1, the scene 160 might be captured by one or more camera devices 120a, 120b. In the case the scene 160 is captured by two or more camera devices 120a, 120b, the stream of image frames in which the tracked object 170 is present might thus also be captured by two or more different camera devices 120a, 120b. Hence, in some embodiments, the stream of image frames originates from image frames having been captured by at least two camera devices 120a, 120b. If the tracking of the tracked object 170 is performed locally at each of the camera devices 120a, 120b, this might require information of the tracked object 170 to be communicated between the at least two camera devices 120a, 120b. In other examples the tracking of the tracked object 170 is performed centrally for image frames received from all the at least two camera devices 120a, 120b. The latter does not require any information about the tracked object 170 to be exchanged between the at least two camera devices 120a, 120b.

In some aspects, for example when the stream of image frames originates from image frames having been captured by at least two camera devices 120a, 120b, but also in other examples, there is a risk that the tracking of the tracked object 170 is lost and/or that the classification of the tracked object 170 changes from one image frame to the next. Therefore, in some embodiments, the method further comprises:
S116: It is verified that the object class of the instances of the tracked object 170 does not change within the stream of image frames. The verification might be performed by verifier module 430.

In some aspect, in order to avoid training bias (e.g., machine learning bias, algorithm bias, or artificial intelligence bias) the pre-trained object classifier 114b is not re-trained using any tracked objects 170 already classified with a high confidence level. There are different ways to accomplish this. A first way is to explicitly exclude the tracked objects 170 already classified with a high confidence level from the retraining. In particular, in some embodiments, the pre-trained object classifier 114b is retrained only with the annotated instances of the tracked object 170 for which the level of confidence was verified to not be higher than the threshold confidence value. A second way is to set a low weighting value for the tracked objects 170 already classified with a high confidence level during the re-training. In this way, the tracked objects 170 already classified with a high confidence level can be implicitly excluded from the re-training. That is, in some embodiments, each of the annotated instances of the tracked object 170 is assigned a respective weighting value according to which the annotated instances of the tracked object 170 are weighted when the pre-trained object classifier 114b is retrained, and the weighting value of the annotated instances of the tracked object 170 for which the level of confidence was verified to be higher than the threshold confidence value is lower than the weighting value of the annotated instances of the tracked object 170 for which the level of confidence was verified to not be higher than the threshold confidence value.

There could be further different uses of the annotated instances of the tracked object 170 than re-training the the pre-trained object classifier 114b. In some aspects, the annotated instances of the tracked object 170 might be collected at a database 116 and/or be provided to a further device 118. Hence, in some embodiments, the method further comprises:
S120: The annotated instances of the tracked object 170 are provided to a database 116 and/or a further device 118. The annotated instance might be provided to the database 116 and/or the further device 118 by provider module 450.

This enables also other pre-trained object classifiers to benefit from the annotated instances of the tracked object 170.

Reference is next made to **Fig. 4** which schematically illustrates two streams 200, 200' of image frames 210a:210c. In particular, in Fig. 4 is illustrated a first stream 200 of image frames 210a:210c where the tracked object 170 only in image frame 210c has been classified with a level of confidence being higher than a threshold confidence value. In Fig. 4 the tracked object 170 is for illustrative purposes assumed to have been classified with a level of confidence being higher than a threshold confidence value to belong to the object class "walking male person" only in image frame 210c. This is due to the fact that in image frames 210a, 210b the lower half of the tracked object 170 is covered by foliage, which makes it difficult for the object classifier to determine whether the person is walking or not. In Fig. 4 is also illustrated a second stream 200' of the same image frames 210a:210c but after application of the herein disclosed embodiments, as indicated by the arrow labelled "Annotation". By application of the herein disclosed embodiments, also the instances of the tracked image 170 in image frames 210a, 210b are annotated as belonging to the same object class as the instance of the tracked image 170 in image frames 210c. This is in Fig. 4 illustrated by arrows 220a, 220b. Hence, also the instances of the tracked object 170 in image frames 210a, 210b are annotated as being classified with a level of confidence being higher than the threshold confidence value to belong to the object class "walking male person", despite the presence of the partially obstructing foliage. In other words, the instances of the tracked object 170 in image frames 210a, 210b inherit the annotation of the instance of the tracked object 170 in image frame 210c. The instances of the tracked object 170 in image frames 210a, 210b can then be used to re-train the pre-trained object classifier 114b.

**Fig. 5** schematically illustrates, in terms of a number of functional units, the components of a system 110 according to an embodiment. Processing circuitry 510 is provided using any combination of one or more of a suitable central processing unit (CPU), multiprocessor, microcontroller, digital signal processor (DSP), etc., capable of executing software instructions stored in a computer program product 610 (as in Fig. 6), e.g. in the form of a storage medium 530. The processing circuitry 510 may further be provided as at least one application specific integrated circuit (ASIC), or field programmable gate array (FPGA).

Particularly, the processing circuitry 510 is configured to cause the system 110 to perform a set of operations, or steps, as disclosed above. For example, the storage medium 530 may store the set of operations, and the processing circuitry 510 may be configured to retrieve the set of operations from the storage medium 530 to cause the system iio to perform the set of operations. The set of operations may be provided as a set of executable instructions.

Thus the processing circuitry 510 is thereby arranged to execute methods as herein disclosed. The storage medium 530 may also comprise persistent storage, which, for example, can be any single one or combination of magnetic memory, optical memory, solid state memory or even remotely mounted memory. The system 110 may further comprise a communications interface 520 at least configured for communications with further devices, functions, nodes, and devices. As such the communications interface 520 may comprise one or more transmitters and receivers, comprising analogue and digital components. The processing circuitry 510 controls the general operation of the system 110 e.g. by sending data and control signals to the communications interface 520 and the storage medium 530, by receiving data and reports from the communications interface 520, and by retrieving data and instructions from the storage medium 530. Other components, as well as the related functionality, of the system 110 are omitted in order not to obscure the concepts presented herein.

Fig. 6 shows one example of a computer program product 610 comprising computer readable storage medium 630. On this computer readable storage medium 630, a computer program 620 can be stored, which computer program 620 can cause the processing circuitry 210 and thereto operatively coupled entities and devices, such as the communications interface 220 and the storage medium 230, to execute methods according to embodiments described herein. The computer program 620 and/or computer program product 610 may thus provide means for performing any steps as herein disclosed.

In the example of Fig. 6, the computer program product 610 is illustrated as an optical disc, such as a CD (compact disc) or a DVD (digital versatile disc) or a Blu-Ray disc. The computer program product 610 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 620 is here schematically shown as a track on the depicted optical disk, the computer program 620 can be stored in any way which is suitable for the computer program product 610.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for retraining a pre-trained object classifier (114b), the method being performed by a system (110), the system (110) comprising processing circuitry (510), the method comprising:
obtaining (S102) a stream (200, 200') of image frames (210a:210c) of a scene (160), wherein each of the image frames (210a:210c) depicts an instance of a tracked object (170), and wherein the tracked object (170) is one same object (170) being tracked when moving in the scene (160);
classifying (S104), with a level of confidence, each instance of the tracked object (170) to belong to an object class;
verifying (S106) that the level of confidence for at least one of the instances of the tracked object (170), and for only one object class, is higher than a threshold confidence value, for thereby ensuring that at least one of the instances of the tracked object (170) is classified with high confidence to said only one object class; and when so:
annotating (S118) all instances of the tracked object (170) in the stream (200, 200') of image frames (210a:210c) as belonging to said only one object class with high confidence, yielding annotated instances of the tracked object (170); and
retraining (S122) the pre-trained object classifier (114b) with at least some of the annotated instances of the tracked object (170).

2. The method according to claim 1, wherein at least some of the instances of the tracked object (170) are classified to also belong to a further object class with a further level of confidence, and wherein the method further comprises:
verifying (S108) that the further level of confidence is lower than the threshold confidence value for the at least some of the instances of the tracked object (170).

3. The method according to any preceding claim, wherein the method further comprises:
verifying (S116) that the object class of the instances of the tracked object (170) does not change within the stream (200, 200') of image frames (210a:210c).

4. The method according to any preceding claim, wherein the tracked object (170) moves along a path in the stream (200, 200') of image frames (210a:210c), and wherein the path is tracked when the tracked object (170) is tracked.

5. The method according to claim 4, wherein the path is tracked at a level of accuracy, and wherein the method further comprises:
verifying (S110) that the level of accuracy is higher than a threshold accuracy value.

6. The method according to claim 4 or 5, wherein the method further comprises:
verifying (S112) that the path has neither split into at least two paths nor merged from at least two paths within the stream (200, 200') of image frames (210a:210c).

7. The method according to any preceding claim, wherein the tracked object (170) has a size in the image frames (210a:210c), and wherein the method further comprises:
verifying (S114) that that the size of the tracked object (170) does not change more than a threshold size value within the stream (200, 200') of image frames (210a:210c).

8. The method according to claim 7, wherein the size of the tracked object (170) is adjusted by distance-dependent compensation factor determined as a function of distance between the tracked object (170) and a camera device (120a, 120b) having captured the stream (200, 200') of image frames (210a:210c) of the scene (160) when verifying that that the size of the tracked object (170) does not change more than the threshold size value within the stream (200, 200') of image frames (210a:210c).

9. The method according to any preceding claim, wherein the pre-trained object classifier (114b) is retrained only with the annotated instances of the tracked object (170) for which the level of confidence was verified to not be higher than the threshold confidence value.

10. The method according to any preceding claim, wherein each of the annotated instances of the tracked object (170) is assigned a respective weighting value according to which the annotated instances of the tracked object (170) are weighted when the pre-trained object classifier (114b) is retrained, and wherein the weighting value of the annotated instances of the tracked object (170) for which the level of confidence was verified to be higher than the threshold confidence value is lower than the weighting value of the annotated instances of the tracked object (170) for which the level of confidence was verified to not be higher than the threshold confidence value.

11. The method according to any preceding claim, wherein the method further comprises:
providing (S120) the annotated instances of the tracked object (170) to a database (116) and/or a further device (118).

12. The method according to any preceding claim, wherein the stream (200, 200') of image frames (210a:210c) originates from image frames (210a:210c) having been captured by at least two camera devices (120a, 120b).

13. The method according to any preceding claim, wherein the classifying is performed at a first entity (114a) and the retraining is performed at a second entity (114b) physically separated from the first entity (114a).

14. A system (110) for retraining a pre-trained object classifier (114b), the system (110) comprising processing circuitry (510), the processing circuitry being configured to cause the system (110) to:
obtain a stream (200, 200') of image frames (210a:210c) of a scene (160), wherein each of the image frames (210a:210c) depicts an instance of a tracked object (170), and wherein the tracked object (170) is one same object (170) being tracked when moving in the scene (160);
classify, with a level of confidence, each instance of the tracked object (170) to belong to an object class;
verify that the level of confidence for at least one of the instances of the tracked object (170), and for only one object class, is higher than a threshold confidence value, for thereby ensuring that at least one of the instances of the tracked object (170) is classified with high confidence to said only one object class; and when so:
annotate all instances of the tracked object (170) in the stream (200, 200') of image frames (210a:210c) as belonging to said only one object class with high confidence, yielding annotated instances of the tracked object (170); and
retrain the pre-trained object classifier (114b) with at least some of the annotated instances of the tracked object (170).

15. A computer program (610) for retraining a pre-trained object classifier (114b), the computer program comprising computer code which, when run on processing circuitry (510) of a system (110), causes the system (110) to:
obtain (S102) a stream (200, 200') of image frames (210a:210c) of a scene (160), wherein each of the image frames (210a:210c) depicts an instance of a tracked object (170), and wherein the tracked object (170) is one same object (170) being tracked when moving in the scene (160);
classify (S104), with a level of confidence, each instance of the tracked object (170) to belong to an object class;
verify (S106) that the level of confidence for at least one of the instances of the tracked object (170), and for only one object class, is higher than a threshold confidence value, for thereby ensuring that at least one of the instances of the tracked object (170) is classified with high confidence to said only one object class; and when so:
annotate (S118) all instances of the tracked object (170) in the stream (200, 200') of image frames (210a:210c) as belonging to said only one object class with high confidence, yielding annotated instances of the tracked object (170); and
retrain (S122) the pre-trained object classifier (114b) with at least some of the annotated instances of the tracked object (170).

## Patentansprüche

1. Verfahren zum Umtrainieren einer vortrainierten Objektklassifizierungseinrichtung (114b), wobei das Verfahren von einem System (110) ausgeführt wird, wobei das System (110) Verarbeitungsschaltungen (510) umfasst, wobei das Verfahren Folgendes umfasst:
Gewinnen (S102) eines Stroms (200, 200') aus Einzelbildern (210a:210c) einer Szene (160), wobei jedes der Einzelbilder (210a:210c) eine Instanz eines nachverfolgten Objekts (170) abbildet und wobei das nachverfolgte Objekt (170) immer dasselbe Objekt (170) ist, das nachverfolgt wird, wenn es sich in der Szene (160) bewegt,
Klassifizieren (S104) jeder Instanz des nachverfolgten Objekts (170) mit einem Vertrauensniveau als zu einer Objektklasse gehörig,
Verifizieren (S106), dass das Vertrauensniveau für mindestens eine der Instanzen des nachverfolgten Objekts (170) und für nur eine Objektklasse höher als ein Vertrauensschwellwert ist, um dadurch sicherzustellen, dass mindestens eine der Instanzen des nachverfolgten Objekts (170) mit hohem Vertrauen in die nur eine Objektklasse klassifiziert wird, und in diesem Fall:
Annotieren (S118) aller Instanzen des nachverfolgten Objekts (170) in dem Strom (200, 200') aus Einzelbildern (210a:210c) als mit hohem Vertrauen zu der nur einen Objektklasse gehörig, wodurch annotierte Instanzen des nachverfolgten Objekts (170) erzielt werden, und
Umtrainieren (S122) der vortrainierten Objektklassifizierungseinrichtung (114b) mit mindestens einigen der annotierten Instanzen des nachverfolgten Objekts (170).

2. Verfahren nach Anspruch 1, wobei mindestens einige der Instanzen des nachverfolgten Objekts (170) als zu einer weiteren Objektklasse mit einem weiteren Vertrauensniveau gehörig klassifiziert werden; und wobei das Verfahren ferner Folgendes umfasst:
Verifizieren (S108), dass das weitere Vertrauensniveau für die mindestens einigen der Instanzen des nachverfolgten Objekts (170) niedriger als der Vertrauensschwellwert ist.

3. Verfahren nach einem vorhergehenden Anspruch, wobei das Verfahren ferner Folgendes umfasst:
Verifizieren (S116), dass sich die Objektklasse der Instanzen des nachverfolgten Objekts (170) in dem Strom (200, 200') aus Einzelbildern (210a:210c) nicht ändert.

4. Verfahren nach einem vorhergehenden Anspruch, wobei sich das nachverfolgte Objekt (170) entlang eines Weges in dem Strom (200, 200') aus Einzelbildern (210a:210c) bewegt und wobei der Weg nachverfolgt wird, wenn das nachverfolgte Objekt (170) nachverfolgt wird.

5. Verfahren nach Anspruch 4, wobei der Weg mit einem Genauigkeitsniveau nachverfolgt wird und wobei das Verfahren ferner Folgendes umfasst:
Verifizieren (S110), dass das Genauigkeitsniveau höher als ein Genauigkeitsschwellwert ist.

6. Verfahren nach Anspruch 4 oder 5, wobei das Verfahren ferner Folgendes umfasst:
Verifizieren (S112), dass sich der Weg in dem Strom (200, 200') aus Einzelbildern (210a:210c) weder in mindestens zwei Wege geteilt hat noch aus mindestens zwei Wegen zusammengelaufen ist.

7. Verfahren nach einem vorhergehenden Anspruch, wobei das nachverfolgte Objekt (170) eine Größe in den Einzelbildern (210a:210c) aufweist und wobei das Verfahren ferner Folgendes umfasst:
Verifizieren (S114), dass sich die Größe des nachverfolgten Objekts 170 in dem Strom (200, 200') aus Einzelbildern (210a:210c) nicht um mehr als einen Größenschwellwert ändert.

8. Verfahren nach Anspruch 7, wobei die Größe des nachverfolgten Objekts (170) mit einem abstandsabhängigen Kompensationsfaktor justiert wird, der als eine Funktion des Abstandes zwischen dem nachverfolgten Objekt (170) und einem Kameragerät (120a, 120b) bestimmt wird, das den Strom aus Einzelbildern (210a:210c) der Szene (160) erfasst hat, wenn verifiziert wird, dass sich die Größe des nachverfolgten Objekts (170) in dem Strom (200, 200') aus Einzelbildern (210a:210c) nicht um mehr als den Größenschwellwert verändert.

9. Verfahren nach einem vorhergehenden Anspruch, wobei die vortrainierte Objektklassifizierungseinrichtung (114b) nur mit annotierten Instanzen des nachverfolgten Objekts (170) umtrainiert wird, für die das Vertrauensniveau als nicht höher als der Vertrauensschwellwert verifiziert wurde.

10. Verfahren nach einem vorhergehenden Anspruch, wobei jeder der annotierten Instanzen des nachverfolgten Objekts (170) ein entsprechender Gewichtungswert zugewiesen wird, gemäß dem die annotierten Instanzen des nachverfolgten Objekts (170) gewichtet werden, wenn die vortrainierte Objektklassifizierungseinrichtung (114b) umtrainiert wird, und wobei der Gewichtungswert der annotierten Instanzen des nachverfolgten Objekts (170), für die das Vertrauensniveau als höher als der Vertrauensschwellwert verifiziert wurde, niedriger als der Gewichtungswert der annotierten Instanzen des nachverfolgten Objekts (170) ist, für die das Vertrauensniveau als nicht höher als der Vertrauensschwellwert verifiziert wurde.

11. Verfahren nach einem vorhergehenden Anspruch, wobei das Verfahren ferner Folgendes umfasst:
Bereitstellen (S120) der annotierten Instanzen des nachverfolgten Objekts (170) für eine Datenbank 116 und/oder ein weiteres Gerät (118).

12. Verfahren nach einem vorhergehenden Anspruch, wobei der Strom (200, 200') aus Einzelbildern (210a:210c) von Einzelbildern (210a:210c) stammt, die durch mindestens zwei Kamerageräte (120a, 120b) erfasst wurden.

13. Verfahren nach einem vorhergehenden Anspruch, wobei das Klassifizieren an einer ersten Entität (114a) durchgeführt wird, und das Umtrainieren an einer zweiten Entität (114b) durchgeführt wird, die physisch von der ersten Entität (114a) getrennt ist.

14. System zum Umtrainieren einer vortrainierten Objektklassifizierungseinrichtung (114b), wobei das System (110) Verarbeitungsschaltungen (510) umfasst, wobei die Verarbeitungsschaltungen dafür konfiguriert sind, das System (110) zu Folgendem zu veranlassen:
Gewinnen eines Stroms (200, 200') aus Einzelbildern (210a:210c) einer Szene (160), wobei jedes der Einzelbilder (210a:210c) eine Instanz eines nachverfolgten Objekts (170) abbildet und wobei das nachverfolgte Objekt (170) immer dasselbe Objekt (170) ist, das nachverfolgt wird, wenn es sich in der Szene (160) bewegt,
Klassifizieren jeder Instanz des nachverfolgten Objekts (170) mit einem Vertrauensniveau als zu einer Objektklasse gehörig,
Verifizieren, dass das Vertrauensniveau für mindestens eine der Instanzen des nachverfolgten Objekts (170) und für nur eine Objektklasse höher als ein Vertrauensschwellwert ist, um dadurch sicherzustellen, dass mindestens eine der Instanzen des nachverfolgten Objekts (170) mit hohem Vertrauen in die nur eine Objektklasse klassifiziert wird, und in diesem Fall:
Annotieren aller Instanzen des nachverfolgten Objekts (170) in dem Strom (200, 200') aus Einzelbildern (210a:210c) als mit hohem Vertrauen zu der nur einen Objektklasse gehörig, wodurch annotierte Instanzen des nachverfolgten Objekts (170) erzielt werden, und
Umtrainieren der vortrainierten Objektklassifizierungseinrichtung (114b) mit mindestens einigen der annotierten Instanzen des nachverfolgten Objekts (170).

15. Computerprogramm (610) zum Umtrainieren einer vortrainierten Objektklassifizierungseinrichtung (114b), wobei das Computerprogramm Computercode umfasst, der bei Ausführung auf Verarbeitungsschaltungen (510) eines Systems (110) das System (110) zu Folgendem veranlasst:
Gewinnen (S102) eines Stroms (200, 200') aus Einzelbildern (210a:210c) einer Szene (160), wobei jedes der Einzelbilder (210a:210c) eine Instanz eines nachverfolgten Objekts (170) abbildet und wobei das nachverfolgte Objekt (170) immer dasselbe Objekt (170) ist, das nachverfolgt wird, wenn es sich in der Szene (160) bewegt,
Klassifizieren (S104) jeder Instanz des nachverfolgten Objekts (170) mit einem Vertrauensniveau als zu einer Objektklasse gehörig,
Verifizieren (S106), dass das Vertrauensniveau für mindestens eine der Instanzen des nachverfolgten Objekts (170) und für nur eine Objektklasse höher als ein Vertrauensschwellwert ist, um dadurch sicherzustellen, dass mindestens eine der Instanzen des nachverfolgten Objekts (170) mit hohem Vertrauen in die nur eine Objektklasse klassifiziert wird, und in diesem Fall:
Annotieren (S118) aller Instanzen des nachverfolgten Objekts (170) in dem Strom (200, 200') aus Einzelbildern (210a:210c) als mit hohem Vertrauen zu der nur einen Objektklasse gehörig, wodurch annotierte Instanzen des nachverfolgten Objekts (170) erzielt werden, und
Umtrainieren (S122) der vortrainierten Objektklassifizierungseinrichtung (114b) mit mindestens einigen der annotierten Instanzen des nachverfolgten Objekts (170).

## Revendications

1. Procédé de réapprentissage d'un classificateur d'objet pré-formé (114b), ce procédé étant réalisé par un système (110), le système (110) comprenant des circuits de traitement (510), ce procédé comprenant :
l'obtention (S102) d'un flux (200, 200') de trames d'images (210a : 210c) d'une scène (160), chacune des trames d'images (210a : 210c) décrivant une instance d'un objet suivi (170), et l'objet suivi (170) étant un même objet (170) qui est suivi lorsqu'il se déplace dans la scène (160) ;
la classification (S104), avec un niveau de confiance, de chaque instance de l'objet suivi (170) comme appartenant à une classe d'objets ;
la vérification (S106) que le niveau de confiance pour au moins une des instances de l'objet suivi (170), et pour seulement une classe d'objets, est supérieur à une valeur de confiance seuil pour s'assurer ainsi qu'au moins une des instances de l'objet suivi (170) est classifiée avec une confiance élevée dans ladite une seule classe d'objets ; et, si c'est le cas :
l'annotation (S118) de toutes les instances de l'objet suivi (170) dans le flux (200, 200') de trames d'images (210a : 210c) comme appartenant à ladite seule classe d'objets avec une confiance élevée, en produisant des instances annotées de l'objet suivi (170) ; et
le réapprentissage (S122) du classificateur d'objets pré-formé (114b) avec au moins une des instances annotées de l'objet suivi (170).

2. Procédé selon la revendication 1, dans lequel au moins certaines des instances de l'objet suivi (170) sont classifiées comme appartenant également à une autre classe d'objets avec un autre niveau de confiance, et le procédé comprend en outre :
la vérification (S108) que l'autre niveau de confiance est inférieur à la valeur de confiance seuil pour les au moins certaines des instances de l'objet suivi (170).

3. Procédé selon l'une quelconque des revendications précédentes, ce procédé comprenant en outre :
la vérification (S116) que la classe d'objets des instances de l'objet suivi (170) ne change pas dans le flux (200, 200') de trames d'images (210a : 210c).

4. Procédé selon l'une quelconque des revendications précédentes, dans lequel l'objet suivi (170) se déplace le long d'une trajectoire dans le flux (200, 200') de trames d'images (210a : 210c), et la trajectoire est suivie lorsque l'objet suivi (170) est suivi.

5. Procédé selon la revendication 4, dans lequel la trajectoire est suivie à un niveau de précision, et le procédé comprend en outre :
la vérification (S110) que le niveau de précision est supérieur à une valeur de précision seuil.

6. Procédé selon la revendication 4 ou 5, le procédé comprenant en outre :
la vérification (S112) que la trajectoire ne s'est ni fractionnée en au moins deux trajectoires ni fusionnée à partir d'au moins deux trajectoires dans le flux (200, 200') de trames d'images (210a : 210c).

7. Procédé selon l'une quelconque des revendications précédentes, dans lequel l'objet suivi (170) a une taille dans les trames d'images (210a : 210c), et le procédé comprend en outre :
la vérification (S114) que la taille de l'objet suivi (170) ne change pas plus qu'une valeur de taille seuil dans le flux (200, 200') de trames d'images (210a : 210c).

8. Procédé selon la revendication 7, dans lequel la taille de l'objet suivi (170) est réglée par un facteur de compensation dépendant de la distance déterminé en fonction de la distance entre l'objet suivi (170) et un dispositif de caméra (120a, 120b) ayant capturé le flux (200, 200') de trames d'images (210a : 210c) de la scène (160) lors de la vérification que la taille de l'objet suivi (170) ne change pas plus que la valeur de taille seuil dans le flux (200, 200') de trames d'images (210a : 210c).

9. Procédé selon l'une quelconque des revendications précédentes, dans lequel le classificateur d'objets pré-formé (114b) fait l'objet d'un réapprentissage seulement avec les instances annotées de l'objet suivi (170) pour lesquelles le niveau de confiance a été vérifié comme n'étant pas supérieur à la valeur de confiance seuil.

10. Procédé selon l'une quelconque des revendications précédentes, dans lequel est associée à chacune des instances annotées de l'objet suivi (170) une valeur de pondération respective suivant laquelle les instances annotées de l'objet suivi (170) sont pondérées lorsque le classificateur d'objets pré-formé (114b) fait l'objet d'un réapprentissage, et la valeur de pondération des instances annotées de l'objet suivi (170) pour lesquelles le niveau de confiance a été vérifié comme étant supérieur à la valeur de confiance seuil est inférieur à la valeur de pondération des instances annotées de l'objet suivi (170) pour lesquelles le niveau de confiance a été vérifié comme n'étant pas supérieur à la valeur de confiance seuil.

11. Procédé selon l'une quelconque des revendications précédentes, ce procédé comprenant en outre :
la fourniture (S120) des instances annotées de l'objet suivi (170) à une base de données (116) et/ou un autre dispositif (118).

12. Procédé selon l'une quelconque des revendications précédentes, dans lequel le flux (200, 200') de trames d'images (210a : 210c) provient de trames d'images (210a : 210c) qui ont été capturées par au moins deux dispositifs de caméra (120a, 120b).

13. Procédé selon l'une quelconque des revendications précédentes, dans lequel la classification est réalisée dans une première entité (114a) et le réapprentissage est réalisé dans une seconde entité (114b) séparée physiquement de la première entité (114a).

14. Système (110) de réapprentissage d'un classificateur d'objet pré-formé (114b), ce système (110) comprenant des circuits de traitement (510), les circuits de traitement étant configurés pour amener le système (110) à :
obtenir un flux (200, 200') de trames d'images (210a : 210c) d'une scène (160), chacune des trames d'images (210a : 210c) décrivant une instance d'un objet suivi (170), et l'objet suivi (170) étant un même objet (170) qui est suivi lorsqu'il se déplace dans la scène (160) ;
classifier, avec un niveau de confiance, chaque instance de l'objet suivi (170) comme appartenant à une classe d'objets ;
vérifier que le niveau de confiance pour au moins une des instances de l'objet suivi (170), et pour seulement une classe d'objets, est supérieur à une valeur de confiance seuil pour s'assurer ainsi qu'au moins une des instances de l'objet suivi (170) est classifiée avec une confiance élevée dans ladite une seule classe d'objets ; et, si c'est le cas :
annoter toutes les instances de l'objet suivi (170) dans le flux (200, 200') de trames d'images (210a : 210c) comme appartenant à ladite seule classe d'objets avec une confiance élevée, en produisant des instances annotées de l'objet suivi (170) ; et
faisant réapprendre le classificateur d'objets pré-formé (114b) avec au moins une des instances annotées de l'objet suivi (170).

15. Programme informatique (610) pour le réapprentissage d'un classificateur d'objet pré-formé (114b), le programme informatique comprenant un code informatique qui, lorsqu'il est exécuté sur des circuits de traitement (510) d'un système (110), amène le système (110) à :
obtenir (S102) un flux (200, 200') de trames d'images (210a : 210c) d'une scène (160), chacune des trames d'images (210a : 210c) décrivant une instance d'un objet suivi (170), et l'objet suivi (170) étant un même objet (170) qui est suivi lorsqu'il se déplace dans la scène (160) ;
classifier (S104), avec un niveau de confiance, chaque instance de l'objet) suivi (170) comme appartenant à une classe d'objets ;
vérifier (S106) que le niveau de confiance pour au moins une des instances de l'objet suivi (170), et pour seulement une classe d'objets, est supérieur à une valeur de confiance seuil pour s'assurer ainsi qu'au moins une des instances de l'objet suivi (170) est classifiée avec une confiance élevée dans ladite une seule classe d'objets ; et, si c'est le cas :
annoter (S118) toutes les instances de l'objet suivi (170) dans le flux (200, 200') de trames d'images (210a : 210c) comme appartenant à ladite seule classe d'objets avec une confiance élevée, en produisant des instances annotées de l'objet suivi (170) ; et
faire réapprendre (S122) le classificateur d'objets pré-formé (114b) avec au moins une des instances annotées de l'objet suivi (170).
